# EUROPEAN PATENT APPLICATION

(11) **EP 4 819 096 A1**
(43) Date of publication of application: **07.10.2026**
(21) Application number: 26160423.5
(22) Date of filing: 24.02.2026
(51) Int. Cl.: G08G 1/01, G06Q 10/047, G08G 1/00

(54) **IDENTIFYING REPEATED ACTIVITY ZONES OF VEHICLES**

(30) Priority: 02.04.2025 US 202519098730
(71) Applicant: Deere & Company, Moline, IL 61265 (US)
(72) Inventor: Fotouhi Ardakani, Mohammadkazem, 68163 Mannheim (DE); Grove, Jared, 68163 Mannheim (DE); Anand, Avinash, 68163 Mannheim (DE); Mandavgane, Prajakta, 68163 Mannheim (DE); Enderle, John, 68163 Mannheim (DE); Rodriguez, Brian, 68163 Mannheim (DE); Roth, Dylan, 68163 Mannheim (DE); Asonye, Iroh, 68163 Mannheim (DE); Deo, Mayur, 68163 Mannheim (DE); Pedersen, Ryan, 68163 Mannheim (DE); Lusty, William, 68163 Mannheim (DE)
(74) Representative: Holst, Sönke

(57) **Abstract**

A computing device obtains sensor data from multiple vehicles operating within a geographic region. The sensor data comprises operational telemetry data including at least one of a time-stamped geospatial coordinate, an environmental condition, a vehicle state, or an external machine state. The computing device determines, based on the sensor data, vehicle activity data values of the multiple vehicles, at least one vehicle activity data value of the vehicle activity data values comprising a vehicle type, a geographic location within the geographic region, or an activity type. The computing device determines, based on the vehicle activity data values, a geographic subregion of the geographic region in which the activity type is repeatedly performed over a time period. The computing device provides a graphical user interface indicating the geographic subregion. The graphical user interface is configured to allow user interaction for refinement of the geographic subregion.

## Description

This disclosure relates to computer-implemented control of vehicles and computer-implemented communication with vehicles. More specifically, this disclosure relates to identifying repeated activity zones of vehicles.

### SUMMARY

Disclosed herein are aspects of systems, methods, computer-readable media, and apparatuses for identifying repeated activity zones of vehicles.

Some aspects are a method comprising: obtaining, by a computing device, sensor data from multiple vehicles operating within a geographic region, wherein the sensor data comprises operational telemetry data including at least one of a time-stamped geospatial coordinate, an environmental condition, a vehicle state, or an external machine state ; determining, by the computing device and based on the sensor data, vehicle activity data values of the multiple vehicles, at least one vehicle activity data value of the vehicle activity data values comprising a vehicle type, a geographic location within the geographic region, or an activity type; determining, by the computing device and based on the vehicle activity data values, a geographic subregion of the geographic region in which the activity type is repeatedly performed over a time period; and providing, by the computing device, a graphical user interface indicating the geographic subregion, wherein the graphical user interface is configured to allow user interaction for refinement of the geographic subregion.

In some aspects, the method includes, wherein the activity type is selected from a set of activity types for vehicles of the vehicle type.

In some aspects, the method includes, wherein the geographic subregion comprises a polygon within the geographic region, wherein determining the geographic subregion comprises: obtaining, from the vehicle activity data values, a subset of values associated with the activity type; identifying points in the geographic region corresponding to the subset of values; and generating the polygon based on the identified points.

In some aspects, the method includes, wherein determining the vehicle activity data values comprises determining the vehicle activity data values using an artificial intelligence engine trained to map the sensor data to the activity type.

In some aspects, the method includes, wherein the artificial intelligence engine is trained by: generating a training dataset indicating vehicle types, activity types, and obtained sensor data; and training the artificial intelligence engine based on the training dataset.

In some aspects, the method includes, wherein the sensor data further comprises time-stamped data values indicating a time at which an associated vehicle activity data value was recorded, and wherein determining the geographic subregion comprises: determining the geographic subregion based, on the indicated time.

In some aspects, the method includes, wherein the sensor data includes environmental data associated with the geographic location, and wherein determining the geographic subregion comprises: correlating the activity type with the environmental data to refine boundaries of the geographic subregion.

In some aspects, the method includes, filtering, by the computing device, the sensor data to exclude outlier data values that do not conform to the activity type, based on a threshold deviation from expected sensor data patterns.

In some aspects, the method includes, generating, by the computing device and based on real-time location tracking of a specified vehicle, an alert to a user device when the specified vehicle enters or approaches the geographic subregion associated with the activity type, wherein the specified vehicle is capable of performing the activity type.

In some aspects, the method includes, determining a plan for performance of the activity type by a specified vehicle; and transmitting, to an on-board computer of the specified vehicle, a message indicating the plan for the performance of the activity type at the geographic subregion, wherein the geographic subregion is a closest one to a current location of the specified vehicle of multiple geographic subregions for performing the activity type.

In some aspects, the method includes, causing a navigation engine of the on-board computer to navigate the specified vehicle to the geographic subregion.

In some aspects, the method includes, determining a plan for performing the activity type; identifying a vehicle capable of performing the activity type; and transmitting, to an on-board computer of the identified vehicle, a signal to perform the activity type at the geographic subregion.

In some aspects, the method includes, wherein the signal causes the vehicle to travel to the geographic subregion.

In some aspects, the method includes, updating, by the computing device, the geographic subregion by applying a dynamic weighting algorithm that adjusts boundaries of the geographic subregion based on changes in vehicle activity patterns.

In some aspects, the method includes, assigning, by the computing device, a confidence score to the geographic subregion, the confidence score being based on a frequency of performance of the activity type within the geographic subregion, wherein the graphical user interface indicates a range or a value of the confidence score associated with the geographic subregion.

In some aspects, the method includes, generating, by the computing device and within the graphical user interface, a historical activity map that overlays multiple geographic subregions for the activity type over a defined time period, the historical activity map providing a visual representation of changes in vehicle activity patterns.

In some aspects, the method includes, wherein a specified job type is being performed in the geographic region, the method further comprising: receiving, by the computing device, an input representing that the specified job type is to be performed in a second geographic region; determining, by the computing device using transfer learning, a second geographic subregion of the second geographic region in which the activity type is to be performed; and providing, by the computing device, a second graphical user interface indicating the second geographic subregion, wherein the second graphical user interface is configured to allow user interaction for refinement of the second geographic subregion.

In some aspects, the method includes, wherein the second graphical user interface is provided prior to a beginning of performance of the specified job type in the second geographic region.

Some aspects are a non-transitory computer-readable medium storing instructions which, when executed by processing circuitry, cause the processing circuitry to perform operations comprising: obtaining sensor data from multiple vehicles operating within a geographic region, wherein the sensor data comprises operational telemetry data including at least one of a time-stamped geospatial coordinate, an environmental condition, a vehicle state, or an external machine state; determining, based on the sensor data, vehicle activity data values of the multiple vehicles, at least one vehicle activity data value of the vehicle activity data values comprising a vehicle type, a geographic location within the geographic region, or an activity type; determining, based on the vehicle activity data values, a geographic subregion of the geographic region in which the activity type is repeatedly performed over a time period; and providing a graphical user interface indicating the geographic subregion, wherein the graphical user interface is configured to allow user interaction for refinement of the geographic subregion.

Some aspects are a system comprising: processing circuitry; and a memory subsystem storing instructions which, when executed by the processing circuitry, cause the processing circuitry to perform operations comprising: obtain sensor data from multiple vehicles operating within a geographic region, wherein the sensor data comprises operational telemetry data including at least one of a time-stamped geospatial coordinate, an environmental condition, a vehicle state, or an external machine state; determine, based on the sensor data, vehicle activity data values of the multiple vehicles, at least one vehicle activity data value of the vehicle activity data values comprising a vehicle type, a geographic location within the geographic region, or an activity type; determine, based on the vehicle activity data values, a geographic subregion of the geographic region in which the activity type is repeatedly performed over a time period; and provide a graphical user interface indicating the geographic subregion, wherein the graphical user interface is configured to allow user interaction for refinement of the geographic subregion.

Some aspects are at least one machine-readable medium including instructions that, when executed by processing circuitry, cause the processing circuitry to perform operations to implement any of the above.

Some aspects are an apparatus comprising means to implement any of the above.

Some aspects are a system to implement any of the above.

Some aspects are a method to implement any of the above.

### BRIEF DESCRIPTION OF THE DRAWINGS

This disclosure is best understood from the following detailed description when read in conjunction with the accompanying drawings. It is emphasized that, according to common practice, the various features of the drawings are not to-scale. On the contrary, the dimensions of the various features are arbitrarily expanded or reduced for clarity.
FIG. 1 is a block diagram of an example internal configuration of a computing device.
FIG. 2 is a block diagram of an example of a system for identifying repeated activity zones of vehicles.
FIG. 3 is a block diagram of an example of a vehicular activity map.
FIG. 4 is a flowchart of an example of a technique for identifying repeated activity zones of vehicles.
FIG. 5 is a flowchart of an example of a technique for identifying a geographic subregion corresponding to an activity zone.
FIG. 6 is a flowchart of an example of a technique for navigating a vehicle to a geographic subregion.
FIG. 7 is a flowchart of an example of a technique for causing an activity type to be performed at a geographic subregion.
FIG. 8 is a flowchart of an example of a technique for using transfer learning to identify a new geographic subregion of a new geographic region.

### DETAILED DESCRIPTION

Some industries, such as agriculture and building construction, involve recurring patterns of use of vehicles (e.g., industrial machine vehicles) across a geographic region (e.g., a field in agriculture or a job site in construction). In some cases, the vehicles tend to perform certain tasks (e.g., refilling, unloading, idling) in consistent areas of the geographic region over time, but operators lack a system that could systematically analyze this historical data, identify specific zones based on these repeated activities, and provide actionable insights through digital mapping. According to some schemes, the operators rely on manual observation and memory to determine optimal locations for activities like refilling or unloading. The lack of automation in recognizing these zones hinders efficient field planning and operational routing.

Implementations of the disclosed technology address problems such as these by leveraging historical sensor data from multiple vehicles operating within a defined geographic region to dynamically generate operational maps that indicate specific zones based on recurring vehicle activities. A computing device collects detailed sensor data (e.g., temperature data, pressure data, visual data, or audio data) from multiple vehicles. The sensor data may include at least one of environmental conditions, vehicle motion data (e.g., speed, direction, acceleration), engine status information (e.g., revolutions per minute (RPM), power output, fuel consumption rate), operational data (e.g., application rates, tank fill levels), and environmental readings (e.g., temperature data, pressure data, visual data, or audio data) from multiple vehicles. The sensor data may be used to determine geographic location and activity type (e.g., refilling, idling, harvesting). Based on this sensor data, the computing device processes and analyzes activity patterns to determine geographic subregions where particular activities consistently occur. For example, if certain refilling events recur within a specific area, that area is defined as a designated refilling zone. This analysis yields operationally valuable insights, which are then output to users as an interactive map showing these subregions, thus enabling operators to optimize field planning and reduce downtime due to unnecessary travel or inefficient task routing.

As used herein, the term, "environmental condition" includes, among other things, physical characteristics of the environment in which vehicles operate, including but not limited to soil moisture levels, soil composition, field topography, crop health indicators, weather conditions (e.g., temperature, humidity, precipitation), physical obstacles, water features (e.g., streams, irrigation channels), and proximity to fixed infrastructure elements (e.g., grain silos, equipment sheds, fuel stations). The environmental conditions are detected by vehicle-mounted sensors or obtained from external data sources, and are used to understand how the physical environment influences vehicle activities and to refine the boundaries of identified geographic subregions. In some implementations, environmental conditions may exclude economic or market factors such as commodity prices or fuel costs.

Some implementations leverage historical machine operation data to assist in planning and optimizing operations across the geographic region where the vehicles are working. Some implementations relate to a service that not only detects historical patterns in machine activities but also dynamically maps these zones onto field maps accessible via the web and in-machine displays. As a result, some implementations allow for enhanced planning, operational efficiency, and ease of use. The disclosed technology may have applications in various endeavors, such as agriculture, construction, turf, forestry, and other endeavors. Implementations and use cases related to various specific industries are described herein. However, the disclosed technology may be expanded to other industries.

To generate these subregions, a system for identifying repeated activity zones of vehicles can employ a mapping technique that aggregates activity data points, for example, producing polygon-shaped regions on a map that precisely outline where specified activities tend to take place. This capability is further enhanced by an artificial intelligence (AI) engine. In some cases, the AI engine is trained specifically to recognize and categorize activity types based on the input sensor data. In some cases, the AI engine is trained using a training dataset that includes a mapping of vehicle types and activities to specific sensor readings, enabling the AI engine to predictively label (e.g., classify into activity types) new incoming sensor data and vehicle types. The training dataset may be generated manually or by computer, for example, by receiving notifications when vehicles are engaged in certain activities, and obtaining readings of the sensor data at those times. This predictive labeling allows the system to dynamically adjust to variations in activity patterns and provide reliable mapping across both agricultural and non-agricultural applications, such as construction sites. By providing a clear, data-driven visualization of activity zones, the system enables operators to make informed decisions on task planning, routing, and resource allocation across diverse operational environments.

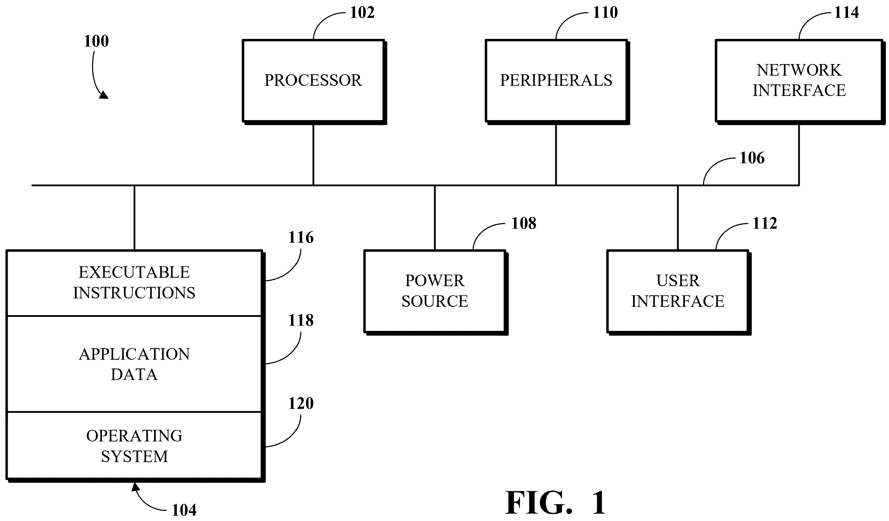

To describe some implementations in greater detail, reference is first made to examples of hardware and software structures used to identify repeated activity zones of vehicles. FIG. 1 is a block diagram of an example internal configuration of a computing device 100.

The computing device 100 includes components or units, such as a processor 102, a memory 104, a bus 106, a power source 108, peripherals 110, a user interface 112, a network interface 114, other suitable components, or a combination thereof. One or more of the memory 104, the power source 108, the peripherals 110, the user interface 112, or the network interface 114 can communicate with the processor 102 via the bus 106.

The processor 102 is a central processing unit, such as a microprocessor, and can include single or multiple processors having single or multiple processing cores. Alternatively, the processor 102 can include another type of device, or multiple devices, configured for manipulating or processing information. For example, the processor 102 can include multiple processors interconnected in one or more manners, including hardwired or networked. The operations of the processor 102 can be distributed across multiple devices or units that can be coupled directly or across a local area or other suitable type of network. The processor 102 can include a cache, or cache memory, for local storage of operating data or instructions. In some cases, the processor 102 may correspond to processing circuitry that includes one or more processors arranged in one or more processing units. The one or more processing units may include, for example, at least one of a central processing unit or a graphics processing unit.

The memory 104 includes one or more memory components, which may each be volatile memory or non-volatile memory. For example, the volatile memory can be random access memory (RAM) (e.g., a DRAM module, such as DDR SDRAM). In another example, the non-volatile memory of the memory 104 can be a disk drive, a solid state drive, flash memory, or phase-change memory. In some implementations, the memory 104 can be distributed across multiple devices. For example, the memory 104 can include network-based memory or memory in multiple clients or servers performing the operations of those multiple devices. In some cases, the memory 104 corresponds to a memory subsystem that includes one or more memories. The memory subsystem may include at least one of a cache unit, a storage unit, a disk, an internal memory, an external memory, or a removable memory.

The memory 104 can include data for immediate access by the processor 102. For example, the memory 104 can include executable instructions 116, application data 118, and an operating system 120. The executable instructions 116 can include one or more application programs, which can be loaded or copied, in whole or in part, from non-volatile memory to volatile memory to be executed by the processor 102. For example, the executable instructions 116 can include instructions for performing some or all of the techniques of this disclosure. The application data 118 can include user data, database data (e.g., database catalogs or dictionaries), or the like. In some implementations, the application data 118 can include functional programs, such as a web browser, a web server, a database server, another program, or a combination thereof. The operating system 120 can be, for example, Microsoft Windows^{®}, Mac OS X^{®}, or Linux^{®}; an operating system for a mobile device, such as a smartphone or tablet device; or an operating system for a non-mobile device, such as a mainframe computer.

The power source 108 provides power to the computing device 100. For example, the power source 108 can be an interface to an external power distribution system. In another example, the power source 108 can be a battery, such as where the computing device 100 is a mobile device or is otherwise configured to operate independently of an external power distribution system. In some implementations, the computing device 100 may include or otherwise use multiple power sources. In some such implementations, the power source 108 can be a backup battery.

The peripherals 110 includes one or more sensors, detectors, or other devices configured for monitoring the computing device 100 or the environment around the computing device 100. For example, the peripherals 110 may include a sensor, such as a camera, a microphone, a thermometer, or a pressure sensor. In another example, the peripherals 110 may include a geolocation component, such as a global positioning system (GPS) location unit. In another example, the peripherals may include a temperature sensor for measuring temperatures of components of the computing device 100, such as the processor 102. In some implementations, the computing device 100 can omit the peripherals 110.

The user interface 112 includes one or more input interfaces and/or output interfaces. An input interface may, for example, be a positional input device, such as a mouse, touchpad, touchscreen, or the like; a keyboard; or another suitable human or machine interface device. An output interface may, for example, be a display, such as a liquid crystal display, a cathode-ray tube, a light emitting diode display, or other suitable display.

The network interface 114 provides a connection or link to a network (e.g., at least one of a cellular network, a wired network, a wireless network, a local area network, or a wide area network). The network interface 114 can be a wired network interface or a wireless network interface. The computing device 100 can communicate with other devices via the network interface 114 using one or more network protocols, such as using Ethernet, transmission control protocol (TCP), internet protocol (IP), power line communication, an IEEE 802.X protocol (e.g., Wi-Fi, Bluetooth, or ZigBee), infrared, visible light, general packet radio service (GPRS), global system for mobile communications (GSM), code-division multiple access (CDMA), Z-Wave, another protocol, or a combination thereof.

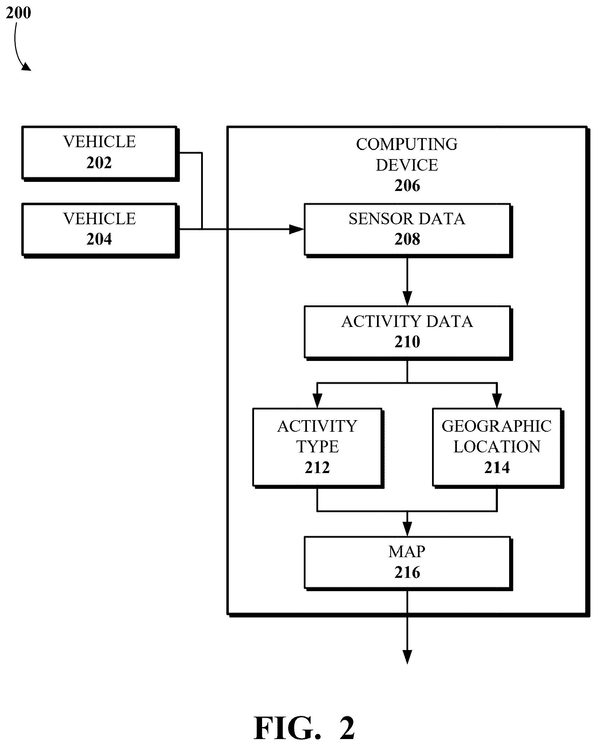

FIG. 2 is a block diagram of an example of a system 200 for identifying repeated activity zones of vehicles. As shown, the system 200 includes a vehicle 202, a vehicle 204, and a computing device 206. The vehicles 202, 204 communicate with the computing device 206, for example, over a network or over a direct wired or wireless connection. While two vehicles 202, 204 are illustrated, the disclosed technology may be implemented with other numbers (e.g., one, three, or more than three) of vehicles.

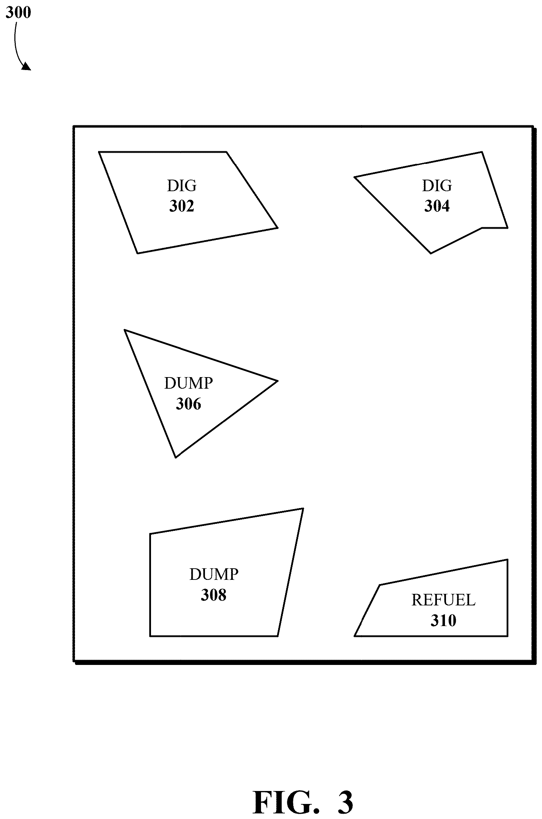

As shown, the vehicles 202, 204 transmit sensor data 208 obtained by sensors of the vehicles 202, 204 to the computing device 206. The sensor data 208 may include at least one of positional data, velocity data, acceleration data, object detection data (e.g., data representing objects detected by the vehicle, for example, using computer vision), environmental condition data, machine state data (e.g., data representing a state of a machine, such as idle, driving, or refueling), visual data (e.g., data obtained by a camera), audio data (e.g., data obtained by a microphone), temperature data (e.g., external temperature data or engine temperature data), pressure data, or other data obtained by one or more sensors. The computing device 206 generates activity data 210, which includes determinations of activity of the vehicles 202, 204, based on the sensor data 208. The activity data 210 includes activity types 212 and geographic locations 214. For example, the activity data 210 may include multiple (activity type 212, geographic location 214) pairs. Alternatively, some of the activity data 210 may lack an activity type 212 or a geographic location 214. In some cases, the activity data 210 may further include confidence scores associated with the activity types 212 or geographic locations 214. The computing device 206 generates a map 216 based on the activity types 212 and the geographic locations 214. The map 216 covers a geographic region and indicates geographic subregions or zones where different activity types 212 occur. Additionally, the map 216 may visually distinguish zones based on the frequency or duration of the associated activity types 212. An example of the map 216 is described in conjunction with FIG. 3.

The vehicles 202, 204 work in the geographic region that is covered by the map 216 and are engaged in a project, such as an agricultural project or a construction project. The vehicles 202, 204 are equipped with sensors capable of capturing various types of data, including positional data, velocity data, acceleration data, object detection data, environmental condition data, and machine state data. This sensor data 208 provides a profile of the vehicles' operation and surroundings. The computing device 206 may obtain the sensor data 208 from the vehicles 202, 204 in any number of ways. In an example, the vehicles 202, 204 transmit the sensor data 208 to the computing device 206, either in real time or at periodic intervals. This transmission ensures that the computing device 206 has access to an updated dataset for analysis, enabling accurate predictions and assessments of vehicle activities.

The computing device 206 may include at least one of a server, a desktop computer, a laptop computer, a tablet computer or a mobile device. The computing device 206 processes data for the system 200. Upon receiving the sensor data 208, the computing device 206 preprocesses the data to filter out noise and outliers. It then analyzes the cleaned sensor data to generate the activity data 210. The activity data 210 includes predictions and determinations of the vehicles' activities, represented by activity types 212 and their corresponding geographic locations 214. For example, an activity type 212 might indicate "refilling," "loading," or "idling," while the geographic location 214 specifies where these activities occur within the monitored geographic region. By pairing activity types 212 with geographic locations 214, the computing device 206 constructs a comprehensive dataset that represents vehicle operations within the geographic region.

The activity data 210 is also used in generating the map 216. Using the activity types 212 and geographic locations 214, the computing device 206 creates a visual representation of the geographic region, highlighting geographic subregions or zones where specific activities occur. For instance, a geographic subregion might correspond to an area where frequent refilling occurs, delineated as a polygon or another geometric shape based on the activity data 210. The computing device 206 may further enrich the map 216 by incorporating additional details, such as the frequency or duration of activities within each geographic subregion. These enhancements to the map 216 enable a user of the map 216 to quickly identify geographic subregions on the map 216 where certain activities typically occur.

The vehicles 202, 204 continuously supply sensor data 208, which the computing device 206 processes to refine activity data 210 and update the map 216. In some embodiments, the map 216 may be displayed on a user interface of the computing device 206 or another computer (e.g., an on-board computer of one or more of the vehicles 202, 204) communicating with the computing device 206, allowing users to view real-time updates, interact with the zones, and make informed decisions. For example, a user can use the map 216 to direct a vehicle to a specific subregion for a requested activity. The map 216 may be adapted dynamically to changing conditions (e.g., if a geographic subregion where the activity of refilling occurs has changed), providing users with actionable insights based on the latest data. The map may be updated in real-time or not in real-time. For example, the map may be updated using batch processing or other techniques.

In some cases, certain outlier data may be removed from the map 216 or not presented on the map 216. This may occur prior to generation of the map 216. The outlier data may be determined using AI techniques. For example, if the activity of digging typically occurs in the northeast corner of the map, a single digging event in the southwest corner of the map would not cause adjustment of the geographic subregion for digging. However, if multiple digging events occur in the southwest corner, an additional geographic location for the activity of digging may be added in the southwest corner of the map.

In addition to supporting user decisions, the computing device 206 may transmit data derived from the map 216 back to the vehicles 202, 204. For instance, autonomous vehicles can receive navigation instructions to reach a designated geographic subregion based on the activity type 212 in which the autonomous vehicles are to engage. This capability enables seamless coordination between users and automated systems, improving overall efficiency. The computing device 206 can also assign confidence scores to activity data 210. In some cases, values of the activity data 210 with confidence scores for the activity type 212 and/or for the geographic location 214 below a threshold might not be used to generate the map 216. This ensures that only data with confidence scores above the threshold is used to generate the map 216.

The computing device 206 outputs the map 216. For example, the map 216 may be printed or displayed on a display of the computing device 206. Alternatively, the map 216 may be transmitted (e.g., via at least one of a network connection, a wired connection, or a wireless connection) to another device (e.g., a client device of an entity associated with the geographic location or an on-board computer of one or more of the vehicles 202, 204).

FIG. 3 is a block diagram of an example of a vehicular activity map 300. The map 300 may be presented at a display of the computing device 206 or another computing device. The map 300 may correspond to the map 216 described earlier, serving as a visual representation of the geographic region and its subregions based on vehicular activities. The map 300 indicates multiple geographic subregions associated with specific activity types, including a digging geographic subregion 302, a digging geographic subregion 304, a dumping geographic subregion 306, a dumping geographic subregion 308, and a refueling geographic subregion 310. For simplicity of illustration, field or worksite entry and exit points are not shown in the map 300, although such points may be detected and included in implementations of the disclosed technology. Each geographic subregion 302, 304, 306, 308, 310 is delineated as a polygon, which may have three, four, five, or more than five sides depending on the spatial distribution of the activity data 210 used to define the subregion. Each geographic subregion 302, 304, 306, 308, 310 includes classified points. In some cases, a bounding box of points around a geographic location may be classified as corresponding to one or more of the geographic subregions 302, 304, 306, 308, 310.

The geographic subregions 302, 304, 306, 308, 310 are generated based on the processing of activity data 210 by the computing device 206. For instance, the digging geographic subregions 302 and 304 represent areas where sensor data 208 from vehicles 202, 204 indicates repeated digging activities, such as excavators or loaders engaging in earth-moving tasks. These areas are defined by clustering geospatial points associated with the "digging" activity type 212 and creating polygons that encompass those points. Similarly, the dumping geographic subregions 306 and 308 are defined by analyzing vehicle activities where material is unloaded or deposited, such as trucks tipping soil or gravel. The polygons representing these subregions reflect the spatial boundaries where such activities predominantly occur.

The refueling geographic subregion 310 is generated from the sensor data (e.g. telemetry data) indicating where vehicles consistently perform refueling activities, identified by operational states such as "stationary" combined with environmental sensor data or time periods corresponding to known refueling behaviors. The refueling geographic subregion 310 may be valuable for operational planning, as it ensures that vehicles that that may need refueling are directed to the appropriate location within the geographic region.

The polygons on the map 300 are dynamic and may be updated as new sensor data 208 is received by the computing device 206. For example, if the boundaries of a subregion shift due to changes in worksite operations or increased activity in adjacent areas, the map 300 may be adjusted to reflect these updates. In some implementations, the map 300 may also display additional contextual information, such as the frequency of activities within each subregion or the confidence scores derived from the activity data 210. This information can be visualized using color coding, labels, or icons to make the map 300 more informative and actionable for users.

Some software or hardware components of the computing device 206 (e.g., worksite management AI engines at the computing device 206) can use the geographic subregions 302, 304, 306, 308, 310 to facilitate enhanced worksite management in the geographic region covered by the map 300. For example, the map 300 can be displayed on a user interface, allowing users to view real-time updates and plan vehicle routes accordingly. The geographic subregions 302, 304, 306, 308, 310 can also be used to dispatch vehicles to specific zones, such as directing a loader to a digging subregion 302 or a refueling truck to the refueling geographic subregion 310. For autonomous vehicles, the map 300 may include predefined paths between subregions, enabling seamless navigation and coordination across the worksite. Alternatively, the paths may be generated during travel based on real-time sensor data (e.g., using lazy evaluation techniques).

In some implementations, the polygons on the map 300 may be refined through user interaction. For example, a user may adjust subregion boundaries directly on the user interface, ensuring that the map 300 aligns with real-world conditions and preferences. This interactive capability further enhances the system's adaptability, allowing it to accommodate diverse worksite configurations and operational requirements.

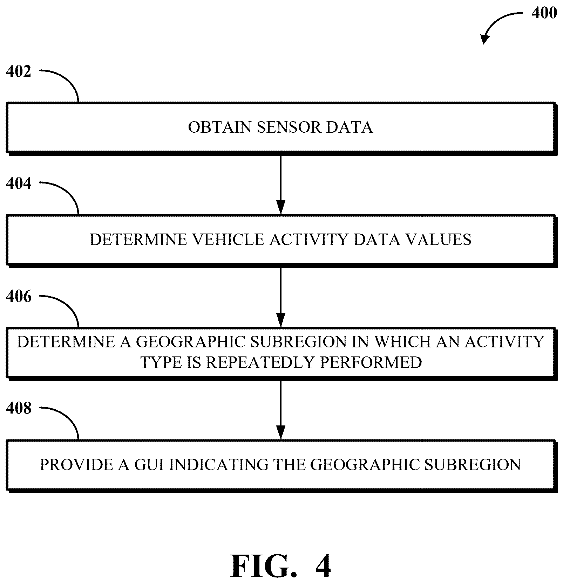

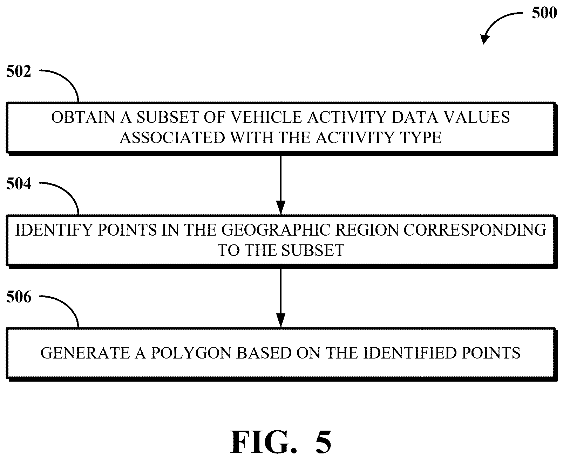

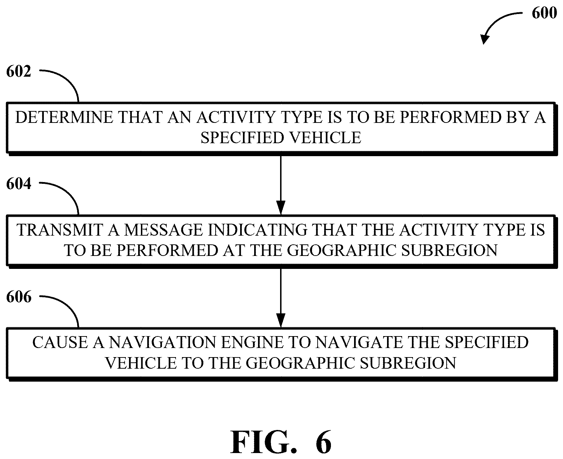

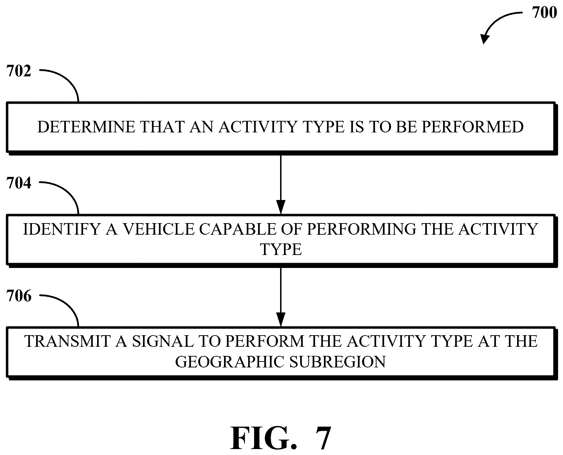

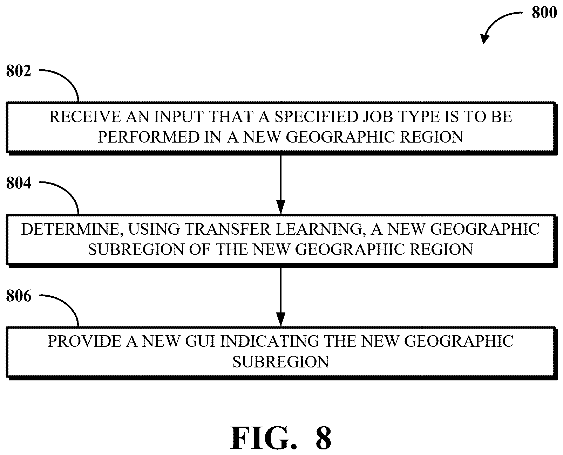

To further describe some implementations in greater detail, reference is next made to examples of techniques for identifying repeated activity zones of vehicles. FIG. 4 is a flowchart of an example of a technique 400 for identifying repeated activity zones of vehicles. FIG. 5 is a flowchart of an example of a technique 500 for identifying a geographic subregion corresponding to an activity zone. FIG. 6 is a flowchart of an example of a technique 600 for navigating a vehicle to a geographic subregion. FIG. 7 is a flowchart of an example of a technique 700 for causing an activity type to be performed at a geographic subregion. FIG. 8 is a flowchart of an example of a technique 800 for using transfer learning to identify a new geographic subregion of a new geographic region. The techniques 400, 500, 600, 700, 800 can be executed using computing devices, such as the systems, hardware, and software described with respect to FIGS. 1-3. The techniques 400, 500, 600, 700, 800 can be performed, for example, by executing a machine-readable program or other computer-executable instructions, such as routines, instructions, programs, or other code. The steps, or operations, of the techniques 400, 500, 600, 700, 800 or another technique, method, process, or algorithm described in connection with the implementations disclosed herein can be implemented directly in hardware, firmware, software executed by hardware, circuitry, or a combination thereof.

For simplicity of explanation, the techniques 400, 500, 600, 700, 800 are depicted and described herein as a series of steps or operations. However, the steps or operations in accordance with this disclosure can occur in various orders and/or concurrently. Additionally, other steps or operations not presented and described herein may be used. Furthermore, not all illustrated steps or operations may be required to implement a technique in accordance with the disclosed subject matter.

FIG. 4 illustrates the technique 400 for identifying repeated activity zones of vehicles. The technique 400 may be implemented by a computing device (e.g., the computing device 206, which may include at least one of a server, a laptop computer, a desktop computer, or another type of computer).

At 402, the computing device obtains sensor data (e.g., the sensor data 208) from multiple vehicles (e.g., the vehicles 202, 204) operating within a geographic region. The sensor data may include operational telemetry data such as time-stamped geospatial coordinates, environmental conditions, vehicle states, and external machine states. The sensor data may be obtained by sensors of the vehicle or by communication of an on-board computer of the vehicle with other devices (e.g., an external machine proximate to the vehicle). As the computing device obtains the sensor data, the computing device may apply filtering to exclude outlier values that do not conform to the expected activity patterns or have a threshold deviation from stored, expected sensor data patterns. Alternatively, if outlier values are detected repeatedly, the computing device may generate an output based on the outlier values for printing, display, or transmission to a messaging address (e.g., for manual review by a human). A messaging address may include an address where messages may be received, such as an email address, a voice messaging address, an address for receiving instant messages, an address for receiving short messaging service (SMS) messages, or an address for receiving multimedia messaging service (MMS) messages. External machine states may include states of external machines which are observed by the vehicle or transmitted to the vehicle (e.g., using a short-range radio such as Bluetooth^{®}). For example, an external machine state may include a fueling machine running low on fuel or a fuel pump not being operational.

At 404, the computing device determines vehicle activity data values (e.g., the activity data 210) of the multiple vehicles based on the sensor data. For instance, the computing device can correlate operational telemetry data with known (e.g., stored in the memory subsystem of the computing device) activity types (e.g., the activity type 212), potentially applying an AI engine trained to map the sensor data to the activity types. The activity types may correspond to a set of activity types for vehicles of a given vehicle type. For example, a truck may be fueled, loaded, or unloaded, corresponding to the activity types of "fuel," "load," and "unload." At least one of the determined vehicle activity data values includes the activity type and a geographic location (e.g., the geographic location 214). The geographic location may be determined using a GPS, assisted GPS (AGPS), or other positioning technology of the associated vehicle.

In some cases, the AI engine that maps the sensor data to the activity types is trained by generating a training dataset indicating vehicle types, activity types, and obtained sensor data. The artificial intelligence engine is then trained based on the training dataset using supervised learning. Alternatively, other training techniques may be used.

At 406, the computing device determines, based on the vehicle activity data, a geographic subregion of the larger geographic region in which the activity type is repeatedly performed over a time period. This determination can involve identifying points within the region that correspond to the selected activity type and generating, based on the identified points, a polygon that defines the boundaries of the geographic subregion. The computing device may employ dynamic techniques (e.g., a dynamic weighting algorithm) to adjust these boundaries over time based on changes in vehicle activity patterns. A confidence score for the geographic subregion may be assigned to reflect a certainty level of the computing device that the activity type occurs in the geographic subregion. In some cases, the confidence score is based on a frequency of performance of the activity type within the geographic subregion.

In some cases, the sensor data includes time-stamped data values indicating a time at which an associated vehicle activity data value was recorded. The computing device determines the geographic subregion based, at least in part, on the indicated time. In some cases, the sensor data includes environmental data associated with the geographic location. Determining the geographic subregion may include correlating the activity type with the environmental data to refine boundaries of the geographic subregion.

At 408, the computing device provides a graphical user interface (GUI) indicating the geographic subregion. In some cases, the GUI is provided in real-time after the geographic subregion is determined. Alternatively, the GUI may be provided at a later time, for example, when the GUI is requested by a user of the computing device (e.g., by accessing an application for viewing the GUI). The GUI may be printed, displayed on a display of the computing device, or transmitted (e.g., over a network) to another computing device or to a messaging address. In some cases, the GUI includes a map (e.g., the vehicular activity map 300) of the geographic region, with the geographic subregions for various activity types indicated thereon. The GUI may be configured to allow user interaction for manual refinement of the geographic subregion, thereby enabling operators to fine-tune boundaries of the geographic subregion and consider additional data or contextual information. In scenarios where the computing device updates the geographic subregion over time, the updated information may be displayed via the GUI, which may be transmitted to the on-board computers of some or all of the vehicles.

In some cases, as described above, the computing device assigns the confidence score to the geographic subregion. The confidence score is based on a frequency of performance of the activity type within the geographic subregion. The GUI indicates (e.g., by color coding or shading) a range or a value of the confidence score associated with the geographic subregion.

In some cases, the computing device generates, within the GUI, a historical activity map that overlays multiple geographic subregions for the activity type over a defined time period. The historical activity map provides a visual representation of changes in vehicle activity patterns, effectively capturing how occurrences of the activity type shift, evolve, or persist over days, weeks, months, or other selected intervals. For example, if a particular type of vehicle operation (e.g., loading or harvesting) tends to cluster in specific subregions during certain seasons, the historical activity map visually illustrates how these "hotspots" expand, contract, or migrate over time. In addition to showing where the activity type was frequently performed, the map can incorporate filters that enable the viewer to focus on particular time frames, compare multiple time frames side-by-side, or examine the activity type alongside external factors such as weather conditions, equipment availability, or changes in operational scheduling. The system may apply color gradients, intensity overlays, or boundary markers to highlight historical trends, identify emerging patterns, and suggest potential future shifts. By presenting these historical patterns in a dynamic and interactive manner, the historical activity map allows operators, analysts, and decision-makers to gain insights into how operational strategies have unfolded, to predict where certain activities might be optimally performed in upcoming periods, and to refine resource allocation decisions accordingly.

In some cases, the computing device generates, based on real-time location tracking of a specified vehicle, an alert to a user device when the specified vehicle enters or approaches the geographic subregion associated with the activity type. If the specified vehicle is capable of performing the activity type, this alert notifies the user that the activity type is likely to be performed.

FIG. 5 illustrates the technique 500 for identifying a geographic subregion corresponding to an activity zone for performing an activity type (e.g., digging). The geographic subregion may include a polygon within the geographic region. The technique 500 may correspond to the operation 406 of FIG. 4 and may be performed by the computing device performing the technique 400.

At 502, the computing device obtains, from the vehicle activity data values, a subset of values associated with the activity type. For example, the computing device may filter raw sensor data to isolate only those telemetry records that correlate with the specified activity type, removing outliers or irrelevant data points that could distort the resulting subregion.

At 504, the computing device identifies points in the geographic region corresponding to the subset of values. These points may represent spatial coordinates where vehicles consistently engage in the activity, and may include temporal information to highlight how activity intensity shifts or remains stable over time. Additionally, the computing device may apply clustering algorithms or other data analysis techniques to group the points based on their proximity or density, ensuring that the resulting polygon accurately reflects significant operational zones rather than scattered anomalies.

At 506, the computing device generates the polygon based on the identified points. This may be accomplished using computational geometry algorithms such as convex hull or alpha shape techniques, which encapsulate the distribution of identified points into a defined polygonal boundary. By doing so, the resulting polygon provides a clear, visual representation of where the activity type is most frequently performed, allowing users to plan, monitor, and optimize operations within that specific geographic subregion. Over time, as the computing device incorporates new data and recalculates the polygon, the boundaries can shift to accommodate evolving operational patterns. In some implementations, the polygon can be dynamically refined over time as the system receives updated sensor data, thereby ensuring that the identified activity zone remains relevant under changing operational conditions.

FIG. 6 illustrates the technique 600 for navigating a vehicle to a geographic subregion. The technique 600 may be performed by the computing device performing the technique 400.

At 602, the computing device determines that an activity type is to be performed by a specified vehicle. For example, a specified vehicle may be selected to engage in dumping (e.g., if it has recently been filled up), tendering (e.g., if a harvester's grain tank is approaching (e.g., within a threshold percentage of) capacity) or refueling (e.g., if its fuel level is below a threshold).

At 604, the computing device transmits, to an on-board computer of the specified vehicle, a message indicating that the activity type is to be performed at the geographic subregion. In some cases, the geographic subregion is a closest one to a current location of the specified vehicle of multiple geographic subregions for performing the activity type. For example, in conjunction with FIG. 3, if a vehicle that is located in the bottom left corner of the geographic region shown in the vehicular activity map 300 is to engage in dumping, that vehicle may be directed to the dumping geographic subregion 308 rather than the dumping geographic subregion 306, because the dumping geographic subregion 308 is closer to the bottom left corner than the dumping geographic subregion 306. This optimization may be particularly valuable for activities like refueling or tendering that occur frequently during field operations, as it minimizes unnecessary travel and reduces operational downtime. However, this optimization may also be used for other activities.

At 606, the computing device causes a navigation engine of the on-board computer to navigate the specified vehicle to the geographic subregion. In an autonomous vehicle, the navigation engine may automatically navigate the vehicle. In a human-driven vehicle, the navigation engine may provide navigation instructions to a human driver.

FIG. 7 illustrates the technique 700 for causing an activity type to be performed at a geographic subregion. The technique 700 may be performed by the computing device performing the technique 400.

At 702, the computing device determines that the activity type is to be performed. For example, the computing device may determine (e.g., based on a stored plan for a job or based on a user input) that digging is to occur.

At 704, the computing device identifies a vehicle capable of performing the activity type. For example, the computing device may store information about vehicles in the geographic region and may store information representing that an identified vehicle (e.g., the vehicle 202) is capable of digging.

At 706, the computing device transmits, to an on-board computer of the identified vehicle, a signal to perform the activity type (e.g., digging) at the geographic subregion. The signal may cause the vehicle to travel to the geographic subregion (e.g., the digging geographic subregion 302). If the vehicle is an autonomous vehicle, the signal may cause the vehicle to automatically navigate itself to the geographic subregion. If the vehicle is a human-driven vehicle, the signal may cause an on-board computer of the vehicle to notify the driver of the activity type to be performed and the geographic subregion where the activity type is to be performed. The on-board computer may then assist with navigation to the geographic subregion.

FIG. 8 illustrates the technique 800 for using transfer learning to identify a new geographic subregion of a new geographic region. The technique 800 may be performed by the computing device performing the technique 400. By employing transfer learning, the computing device leverages insights gained from previously analyzed geographic regions and job types to expedite and enhance the identification of suitable subregions in a new environment. Specifically, if the new geographic region is intended for the same job type or a similar job type as the originally analyzed geographic region, (e.g., both are utilized used for building the same specification home, or for planting the same agricultural plants in the same spatial arrangement) then the information learned from the initial setting, including the relative spatial organization and operational requirements of the activity subregions, can inform the computing device about where similar activities should be performed in the new geographic region. By transferring these learned patterns, the computing device can reduce time and resources needed to determine optimal new geographic subregions of the new geographic region, while maintaining high levels of accuracy and operational consistency.

At 802, the computing device receives an input representing that a specified job type, which was previously performed in a geographic region, is now to be performed in a new geographic region. The input may be provided by a user of the computing device. This input may include details regarding the job type's parameters, historical performance metrics, or desired operational outcomes, thereby allowing the system to correlate past learnings with new spatial contexts.

At 804, the computing device determines, using transfer learning, a new geographic subregion of the new geographic region in which the activity type (which was previously performed in the geographic subregion of the geographic region) is to be performed. By applying algorithms trained on previously analyzed data, the computing device identifies a similarly structured or contextually analogous subregion. This involves mapping previously learned spatial patterns, resource distributions, and operational constraints onto the new region, thus helping to pinpoint where the activity is to occur.

At 806, the computing device provides a new GUI indicating the new geographic subregion within the new geographic region. The new GUI may offer interactive tools, data overlays, or configurable visual elements that assist users in assessing and adjusting the suggested subregion. By directly engaging with the interface, an operator can refine or confirm the computing device's predictions before committing to on-the-ground deployment. The new GUI is configured to allow user interaction for manual refinement of the new geographic subregion. In some cases, the new GUI is provided prior to a beginning of performance of the specified job type in the second geographic region. This may allow stakeholders to verify, alter, or validate the recommended activity zone in advance, ultimately enhancing efficiency and confidence in the system's predictions.

Some implementations relate to a technique for analyzing, using a computing device, vehicle activity within a geographic region to identify and visualize specific areas, referred to as geographic subregions, where particular activities are recurrently performed over time. By utilizing sensor data from multiple vehicles-such as geospatial coordinates, environmental conditions, and telemetry data-the computing device determines patterns of vehicle behavior and uses advanced tools like artificial intelligence to classify and map these activities. The identified subregions are then presented through an interactive graphical user interface, enabling users to refine the boundaries, view historical activity trends, and even trigger alerts or guide vehicles to these areas in real time. Some example applications of the disclosed technique may include dynamic management of resources, such as dispatching vehicles to task-specific locations or adjusting activity zones based on environmental or temporal factors, making the disclosed technique useful for logistics, fleet management, and operations requiring location-based decision-making.

In an example use case of the disclosed technology, a farming operation uses the computing device to optimize the activities of tractors and trucks within a large agricultural field. The computing device receives inputs comprising sensor data collected from the vehicles, including time-stamped GPS coordinates, telemetry data such as engine status, fuel consumption, and load capacity, as well as environmental conditions such as soil moisture, temperature, and weather data. Using this information, the computing device determines activity data for the vehicles, such as plowing, planting, harvesting, or transporting crops. By analyzing patterns in this activity data, the computing device identifies specific subregions within the field where these activities are concentrated over time, such as zones where tendering of harvesters is more likely to occur due to high crop yield density. The outputs include a graphical user interface displaying the identified subregions as polygons overlaid on a map of the field, enabling the farm manager to refine the subregion boundaries and allocate resources effectively. The computing device obtains these outputs by filtering noisy or anomalous data, correlating activity types with environmental conditions (e.g., matching high soil moisture to harvesting operations), and applying AI-based models to classify vehicle activities. Additionally, the system can generate alerts to notify operators when trucks approach a designated loading zone or guide tractors to optimal locations for specific tasks, ensuring efficient coordination and productivity across the field.

In another example use case of the disclosed technology, a fleet management system employs the computing device to optimize the deployment of construction vehicles within a large metropolitan area. The computing device receives inputs in the form of sensor data from the vehicles, including time-stamped geospatial coordinates, telemetry data indicating vehicle states (e.g., speed, load, or fuel level), and environmental conditions such as weather or road status. Based on these inputs, the computing device analyzes vehicle activity data using an artificial intelligence engine trained to classify activity types, such as excavation, material transport, or paving. It identifies recurring patterns of these activities within specific geographic subregions, generating outputs that include a polygonal map overlay indicating zones of concentrated activity and a graphical user interface that allows the fleet manager to refine these zones manually. To derive these outputs, the computing device filters outlier data to improve accuracy, correlates activity types with environmental conditions to refine boundaries, and applies a dynamic weighting algorithm to update subregion boundaries as activity patterns change. The system further generates alerts if a specified vehicle enters or approaches an activity subregion, enabling real-time fleet coordination and improved operational efficiency.

The disclosed technology uses multiple AI engines for analyzing vehicle activity data to identify and optimize geographic subregions where repeated activities occur. These engines may be initially trained and may later be retrained as the conditions in which the data for these engines is obtained is modified.

Some implementations relate to the AI engine for mapping sensor data to activity types. Retraining this engine may include updating its training dataset with newer sensor data reflecting changes in vehicle types, operational environments, and emerging activity patterns. This is relevant, for example, in dynamic industries like agriculture or construction, where new machinery or altered workflows are introduced regularly. The retraining dataset could include sensor data for previously unidentified activity types or updated mappings between activity types and sensor readings. Retraining may employ supervised learning, leveraging labeled examples, or transfer learning, where pre-trained models are fine-tuned using new, domain-specific data.

Some implementations relate to dynamic weighting and boundary adjustment engines. Engines that dynamically adjust the boundaries of geographic subregions based on activity data patterns may require periodic fine-tuning. This retraining could involve incorporating temporal shifts (e.g., seasonal changes in agricultural activities) or environmental variables (e.g., weather or soil conditions). Continuous feedback from users interacting with graphical user interfaces to refine subregion boundaries could also serve as valuable retraining data.

Some implementations relate to confidence scoring techniques. Retraining confidence scoring engines may involve recalibrating thresholds to better match operational realities, such as changes in vehicle activity density or frequency. Integrating additional contextual data, like operational outcomes or user feedback, may enhance scoring accuracy.

Some implementations relate to outlier detection engines. The AI engines for filtering out outlier sensor data values may be periodically retrained to account for new definitions of "normal" as operational contexts evolve. For example, the introduction of faster machinery might redefine what constitutes an outlier in velocity data.

Some implementations relate to AI engines for transfer learning for new geographic regions. When transferring learned patterns to new geographic regions, retraining might involve incorporating region-specific data to refine the transferred model's applicability. This could include adjusting for differences in terrain, climate, or infrastructure.

Some implementations relate to real-time adaptation for autonomous navigation. The navigation engine for directing vehicles to activity subregions might implement retraining or fine-tuning to address evolving road or terrain conditions, especially in autonomous systems. Some aspects incorporating live feedback from sensors and user corrections

Retraining schedules for these engines may depend on data availability, the pace of change in operational environments, and the criticality of maintaining model accuracy. Periodic evaluation of the model's performance against new datasets, combined with mechanisms for continuous learning, may ensure ongoing optimization and robustness in decision-making.

As used herein, unless explicitly stated otherwise, any term specified in the singular may include its plural version. For example, "a computer that stores data and runs software," may include a single computer that stores data and runs software or two computers - a first computer that stores data and a second computer that runs software. Also "a computer that stores data and runs software," may include multiple computers that together stored data and run software. At least one of the multiple computers stores data, and at least one of the multiple computers runs software.

As used herein, the term "computer-readable medium" encompasses one or more computer readable media. A computer-readable medium may include any storage unit (or multiple storage units) that store data or instructions that are readable by processing circuitry. A computer-readable medium may include, for example, at least one of a data repository, a data storage unit, a computer memory, a hard drive, a disk, or a random access memory. A computer-readable medium may include a single computer-readable medium or multiple computer-readable media. A computer-readable medium may be a transitory computer-readable medium or a non-transitory computer-readable medium.

As used herein, the term "memory subsystem" includes one or more memories, where each memory may be a computer-readable medium. A memory subsystem may encompass memory hardware units (e.g., a hard drive or a disk) that store data or instructions in software form. Alternatively or in addition, the memory subsystem may include data or instructions that are hard-wired into processing circuitry.

As used herein, the term "processing circuitry" includes one or more processors. The one or more processors may be arranged in one or more processing units, for example, a central processing unit (CPU), a graphics processing unit (GPU), or a combination of at least one of a CPU or a GPU.

As used herein, the term "engine" may include software, hardware, or a combination of software and hardware. An engine may be implemented using software stored in the memory subsystem. Alternatively, an engine may be hard-wired into processing circuitry. In some cases, an engine includes a combination of software stored in the memory subsystem and hardware that is hard-wired into the processing circuitry.

As used herein, the term "and/or" encompasses its plain and ordinary meaning and may refer to either an intersection or a union of sets of data. In a first example, the phrase "A and/or B" encompasses the intersection of A and B. In a second example, the phrase "A and/or B" encompasses the union of A and B.

The implementations of this disclosure can be described in terms of functional block components and various processing operations. Such functional block components can be realized by a number of hardware or software components that perform the specified functions. For example, the disclosed implementations can employ various integrated circuit components (e.g., memory elements, processing elements, logic elements, look-up tables, and the like), which can carry out a variety of functions under the control of one or more microprocessors or other control devices. Similarly, where the elements of the disclosed implementations are implemented using software programming or software elements, the systems and techniques can be implemented with a programming or scripting language, such as C, C++, Java, JavaScript, assembler, or the like, with the various algorithms being implemented with a combination of data structures, objects, processes, routines, or other programming elements.

Functional aspects can be implemented in algorithms that execute on one or more processors. Furthermore, the implementations of the systems and techniques disclosed herein could employ a number of conventional techniques for electronics configuration, signal processing or control, data processing, and the like. The words "mechanism" and "component" are used broadly and are not limited to mechanical or physical implementations, but can include software routines in conjunction with processors, etc. Likewise, the terms "system" or "tool" as used herein and in the figures, but in any event based on their context, may be understood as corresponding to a functional unit implemented using software, hardware (e.g., an integrated circuit, such as an ASIC), or a combination of software and hardware. In certain contexts, such systems or mechanisms may be understood to be a processor-implemented software system or processor-implemented software mechanism that is part of or callable by an executable program, which may itself be wholly or partly composed of such linked systems or mechanisms.

Implementations or portions of implementations of the above disclosure can take the form of a computer program product accessible from, for example, a computer-usable or computer-readable medium. A computer-usable or computer-readable medium can be a device that can, for example, tangibly contain, store, communicate, or transport a program or data structure for use by or in connection with a processor. The medium can be, for example, an electronic, magnetic, optical, electromagnetic, or semiconductor device.

Other suitable mediums are also available. Such computer-usable or computer-readable media can be referred to as non-transitory memory or media, and can include volatile memory or non-volatile memory that can change over time. The quality of memory or media being non-transitory refers to such memory or media storing data for some period of time or otherwise based on device power or a device power cycle. A memory of an apparatus described herein, unless otherwise specified, does not have to be physically contained by the apparatus, but is one that can be accessed remotely by the apparatus, and does not have to be contiguous with other memory that might be physically contained by the apparatus.

## Claims

1. A method comprising:
obtaining, by a computing device (206), sensor data (208) from multiple vehicles (202, 204) operating within a geographic region, wherein the sensor data comprises operational telemetry data including at least one of a time-stamped geospatial coordinate, an environmental condition, a vehicle state, or an external machine state;
determining, by the computing device and based on the sensor data, vehicle activity data values (210) of the multiple vehicles, at least one vehicle activity data value of the vehicle activity data values comprising a vehicle type, a geographic location (214) within the geographic region, or an activity type (212);
determining, by the computing device and based on the vehicle activity data values, a geographic subregion of the geographic region in which the activity type is repeatedly performed over a time period; and
providing, by the computing device, a graphical user interface indicating the geographic subregion, wherein the graphical user interface is configured to allow user interaction for refinement of the geographic subregion.

2. The method of claim 1, wherein the activity type is selected from a set of activity types for vehicles of the vehicle type.

3. The method of claim 1, wherein the geographic subregion comprises a polygon within the geographic region, wherein determining the geographic subregion comprises:
obtaining, from the vehicle activity data values, a subset of values associated with the activity type;
identifying points in the geographic region corresponding to the subset of values; and
generating the polygon based on the identified points.

4. The method of any of claims 1-3, wherein determining the vehicle activity data values comprises determining the vehicle activity data values using an artificial intelligence engine trained to map the sensor data to the activity type.

5. The method of claim 4, wherein the artificial intelligence engine is trained by:
generating a training dataset indicating vehicle types, activity types, and obtained sensor data; and
training the artificial intelligence engine based on the training dataset.

6. The method of any of claims 1-3, wherein the sensor data further comprises time-stamped data values indicating a time at which an associated vehicle activity data value was recorded, and wherein determining the geographic subregion comprises:
determining the geographic subregion based, on the indicated time.

7. The method of any of claims 1-3, wherein the sensor data includes environmental data associated with the geographic location, and wherein determining the geographic subregion comprises:
correlating the activity type with the environmental data to refine boundaries of the geographic subregion.

8. The method of any of claims 1-3, further comprising:
filtering, by the computing device, the sensor data to exclude outlier data values that do not conform to the activity type, based on a threshold deviation from expected sensor data patterns.

9. The method of any of claims 1-3, further comprising:
generating, by the computing device and based on real-time location tracking of a specified vehicle, an alert to a user device when the specified vehicle enters or approaches the geographic subregion associated with the activity type, wherein the specified vehicle is capable of performing the activity type.

10. The method of any of claims 1-3, further comprising:
determining a plan for performance of the activity type by a specified vehicle; and
transmitting, to an on-board computer of the specified vehicle, a message indicating the plan for the performance of the activity type at the geographic subregion, wherein the geographic subregion is a closest one to a current location of the specified vehicle of multiple geographic subregions for performing the activity type.

11. The method of claim 10, further comprising:
causing a navigation engine of the on-board computer to navigate the specified vehicle to the geographic subregion.

12. The method of any of claims 1-3, further comprising:
determining a plan for performing the activity type;
identifying a vehicle capable of performing the activity type; and
transmitting, to an on-board computer of the identified vehicle, a signal to perform the activity type at the geographic subregion.

13. The method of claim 12, wherein the signal causes the vehicle to travel to the geographic subregion.

14. A non-transitory computer-readable medium (104) storing instructions (116) which, when executed by processing circuitry (102), cause the processing circuitry to perform operations comprising:
obtaining sensor data (208) from multiple vehicles (202, 204) operating within a geographic region, wherein the sensor data comprises operational telemetry data including at least one of a time-stamped geospatial coordinate, an environmental condition, a vehicle state, or an external machine state;
determining, based on the sensor data, vehicle activity data values (210) of the multiple vehicles, at least one vehicle activity data value of the vehicle activity data values comprising a vehicle type, a geographic location (214) within the geographic region, or an activity type (212);
determining, based on the vehicle activity data values, a geographic subregion of the geographic region in which the activity type is repeatedly performed over a time period; and
providing a graphical user interface indicating the geographic subregion, wherein the graphical user interface is configured to allow user interaction for refinement of the geographic subregion.

15. A system comprising:
processing circuitry (102); and
a memory subsystem (104) storing instructions (116) which, when executed by the processing circuitry, cause the processing circuitry to perform operations comprising:
obtain sensor data (208) from multiple vehicles (202, 204) operating within a geographic region, wherein the sensor data comprises operational telemetry data including at least one of a time-stamped geospatial coordinate, an environmental condition, a vehicle state, or an external machine state;
determine, based on the sensor data, vehicle activity data values (210) of the multiple vehicles, at least one vehicle activity data value of the vehicle activity data values comprising a vehicle type, a geographic location (214) within the geographic region, or an activity type (212);
determine, based on the vehicle activity data values, a geographic subregion of the geographic region in which the activity type is repeatedly performed over a time period; and
provide a graphical user interface indicating the geographic subregion, wherein the graphical user interface is configured to allow user interaction for refinement of the geographic subregion.
